(19) Europäisches Patentamt
European Patent Office
Office européen des brevets

(11) Veröffentlichungsnummer: **0 395 947 A2**

# (12) EUROPÄISCHE PATENTANMELDUNG

(21) Anmeldenummer: **90107473.2**

(22) Anmeldetag: **19.04.90**

(51) Int. Cl.[5]: **C08K 5/13, C08L 61/04, C08L 79/08**

(30) Priorität: **02.05.89 DE 3914434**

(43) Veröffentlichungstag der Anmeldung: **07.11.90 Patentblatt 90/45**

(84) Benannte Vertragsstaaten: **DE FR GB IT**

(71) Anmelder: **BAYER AG**
**D-5090 Leverkusen 1 Bayerwerk(DE)**

(72) Erfinder: **Fengler, Gerd, Dr.**
**Bethelstrasse 16**
**D-4150 Krefeld(DE)**
Erfinder: **Idel, Karsten-Josef, Dr.**
**Am Schwarzkamp 38**
**D-4150 Krefeld(DE)**
Erfinder: **Freitag, Dieter, Dr.**
**Hasenheide 10**
**D-4150 Krefeld(DE)**

## (54) Hochschmelzende Polyimide mit verbessertem Verarbeitungsverhalten und verringerter Wasseraufnahme.

(57) Gegenstand der Erfindung sind Polyimidformmassen bzw. Formmassen von Polyimid-Mischungen mit verbesserter thermoplastischer Verarbeitbarkeit und verbesserter Formbeständigkeit bei feuchter Lagerung, die 0,1 bis 40 Gew.-%, vorzugsweise 1 bis 20 Gew.-%, spezielle phenolische Verbindungen enthalten.

EP 0 395 947 A2

# Hochschmelzende Polyimide mit verbessertem Verarbeitungsverhalten und verringerter Wasseraufnahme

Gegenstand der Erfindung sind Polyimidformmassen bzw. Formmassen von Polyimid-Mischungen mit verbesserter thermoplastischer Verarbeitbarkeit und verbesserter Formbeständigkeit bei feuchter Lagerung, die 0,1 bis 40 Gew.-%, vorzugsweise 1 bis 20 Gew.-% spezieller phenolischer Verbindungen enthalten.

Polyimide weisen ausgezeichnete Thermostabilitäten und gute mechanische Eigenschaften auch bei relativ hohen Temperaturen auf, jedoch ist ihre Verarbeitbarkeit nur bei sehr hohen Verarbeitungstemperaturen von z.B. 325 bis 425 °C gegeben (siehe dazu z.B. die Angaben in der Firmenbroschüre von General Electric Comp. zur Verarbeitung ihres Polyetherimids ULTEM®), was einen technischen Nachteil bedeutet.

Es ist ferner bekannt, daß Polyimide im Gleichgewicht recht große Wassermengen aufnehmen, was zur Folge hat, daß dadurch z.B die Reißfestigkeit auf etwa die Hälfte des Ausgangswertes sinkt. Eine weitere Folge der Wasseraufnahme ist das Problem der nicht ausreichenden Maßhaltigkeit der Formkörper. Dabei können lediglich die bei kurzfristigem Kontakt mit Wasser auftretenden Maßänderungen durch Trocknen wieder rückgängig gemacht werden, während länger einwirkende Feuchtigkeit zu stetigen und irreparablen Dimensionsänderungen des Formkörpers führt. (S. dazu Ullmann's Enzyklopädie der Technischen Chemie, 4. Auflage 1978, Verlag Chemie Weinheim, Neu York, Band 15, S. 439).

Durch Konditionieren mit Wasser kann die mangelhafte Maßhaltigkeit der Formkörper zwar deutlich verbessert werden, parallel dazu tritt aber - wie oben beschrieben - eine Verschlechterung in den mechanischen Werten ein (z.B. Reißdehnung).

Zur Verbesserung von Mechanik und Dimensionsstabilität werden Polyimide mit Verstärkungsstoffen, vorzugsweise mit Glasfasern und mineralischen Füllstoffen, ausgerüstet.

Die durch diese Verstärkungsstoffe erzielten Verbesserungen werden jedoch durch andere Nachteile erkauft, insbesondere durch eine weiter verminderte Fließfähigkeit, wodurch die Verarbeitung weiter erschwert wird. Zudem wird es bei steigenden Anteilen an Verstärkungsstoffen schwieriger, Formteile mit störungsfreien Oberflächen zu erhalten.

Es besteht somit ein Bedarf an - gegebenenfalls mit Verstärkungsstoffen ausgerüsteten - Polyimidformmassen bzw. Formmassen von Polyimid-Mischungen mit verbesserter Verarbeitbarkeit bei niedrigeren Verarbeitungstemperaturen, die außerdem eine verminderte Wasseraufnahme und damit größere Dimensionsstabilität aufweisen. Auch sollte eine Polymerschädigung verhindert oder der Abbau durch niedrigere Verarbeitungstemperaturen vermindert werden und auch bei hohem Anteil an Verstärkungsstoff gute Oberflächen erzielbar sein .

Überraschenderweise wurde gefunden, daß man die oben genannten, gewünschten Formmassen erhält, wenn man Polyimid-Formmassen oder Formmassen von Polyimid-Mischungen mit speziellen Mono-, Bis- bzw. Polyphenolen und/oder oligomeren oder polymeren Phenolen modifiziert.

Der Einsatz von Phenolen zur Verbesserung spezieller Eigenschaften von Polyamiden ist seit langem bekannt.

So werden sterisch gehinderte Phenole, d.h. in mindestens einer, vorzugsweise in allen, o-Stellungen zur phenolischen OH-Gruppe mit ≧ $C_3$-Gruppen (z.B mit t-Butyl, Cyclohexyl) substituierte Phenole als Wärmestabilisatoren in Polyamiden verwendet.

Diese Produkte zeigen jedoch wegen ihrer sterischen Hinderungen und wegen des hohen Anteils aliphatischer Kohlenstoffatome in den Phenolmolekülen in höherer Konzentration Verträglichkeitsprobleme (Ausschwitzen!) und sind zudem recht kostspielig.

In der DE-OS 1 769 662 wurden spezielle Phenole eingesetzt, die zu einer verbesserten Deformationsbeständigkeit von Fasern, Borsten und Garnen führen, wobei die Phenole mit weniger als 4 Benzolringen ebenfalls zwingend in einer oder beiden o-Stellungen zu den phenolischen OH-Gruppen sekundäre oder tertiäre Alkylgruppen, d.h. sterisch anspruchsvolle Gruppen, tragen müssen.

Der Einsatz von Phenolen zur Verbesserung von Fließfähigkeit und Dimensionsstabilität von Polyamiden und Polyamid-Mischungen ist ebenfalls bekannt. S. dazu z.B. DE-OS 3 248 329 (EP-A 112 542) DE-OS 3 610 595 (EP-A 224 847), WO 88/06169 (EP-301 005), WO 88/06170 (EP-303 598).

Es ist auch bekannt, die Verarbeitungstemperaturen von Polyimiden durch Mischen mit Polyamiden abzusenken, ohne die guten Eigenschaften von Polyimiden wesentlich zu verändern (EP 104 659).

Überraschenderweise gelingt die Verbesserung der Verarbeitbarkeit durch Herabsetzung der Verarbeitungstemperatur wie die Verringerung der Wasseraufnahme und überraschenderweise Erhöhung der Steifigkeit der Polyimide bzw. Polyimid-Mischungen aber auch ohne Mithilfe des Polyamids, allein durch Zumischen der erfindungsgemäßen Phenole.

Da sich die makroskopischen Eigenschaften von Polyamiden und Polyimiden - z.B. hinsichtlich der hier

besonders interessierenden Reißfestigkeit - deutlich unterscheiden und die Möglichkeiten zur Wasserstoffbrückenbildung aufgrund der erheblich unterschiedlichen Strukturmerkmale nicht de facto als identisch angesehen werden können, ist es nicht von vornherein ersichtlich, daß die in der DE-OS 3 610 595 beschriebenen Diphenole bei den hier zugrundegelegten Formmassen zu den gewünschten Eigenschaftsverbesserungen führen.

Gegenstand der Erfindung sind thermoplastisch verarbeitbare Polyimid-Formmassen bzw. Formmassen von Polyimid-Mischungen, die dadurch gekennzeichnet sind, daß sie 0,1 bis 40 Gew.-%, vorzugsweise 1 bis 20 Gew.-%, insbesondere 1 bis 15 Gew.-%, bezogen auf die Polyimidmenge, an oligomeren oder polymeren Phenolen und/oder Mono-, Di-oder Polyphenole der Formeln (I) oder (II) enthalten,

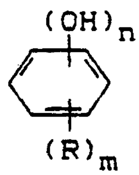

(I)

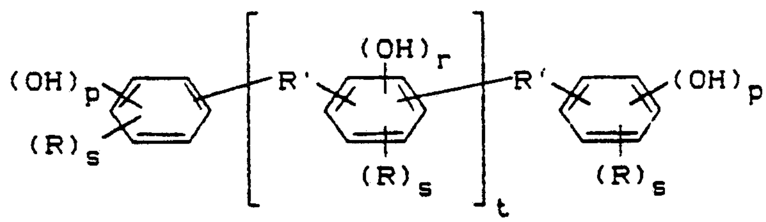

(II)

wobei
n für 1, 2 oder 3 steht,
m bedeutet 3, 4 oder 5 mit (m + n) = 6,
p steht für 1 oder 2,
r bedeutet 0, 1 oder 2,
s steht für 0, 1, 2, 3 oder 4,
t bedeutet 0, 1, 2, 3 oder 4,
und jedes R bedeutet unabhängig Wasserstoff, Halogen, bevorzugt Fluor, Chlor, Brom, $C_1$-$C_{12}$-Alkyl, $C_1$-$C_4$-Alkoxy, $C_6$-$C_{18}$-Aryl oder $C_7$-$C_{20}$-Aralkyl.

In Formel (II) können zwei benachbarte Phenylkerne auch über Reste R verbrückt werden, d.h. R kann auch stehen für
-O-, -S-, $-\underset{\underset{O}{\|}}{C}-$,
$-(CH_2)_{n'}-$, =CH-, -CH=CH-, $-C(CH_3)_2$-n′ = 1 bis 5.

Jedes R′ kann unabhängig für eine chemische Bindung, einen $C_1$-$C_7$-Alkylen- oder $C_5$-$C_6$-Cycloalkylenrest, für

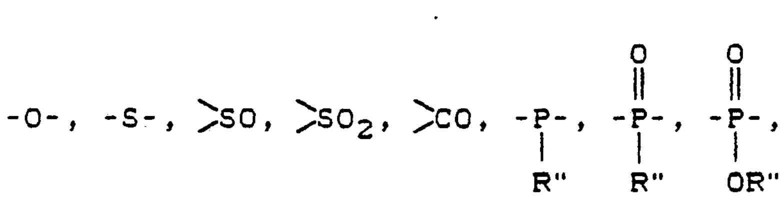

sowie

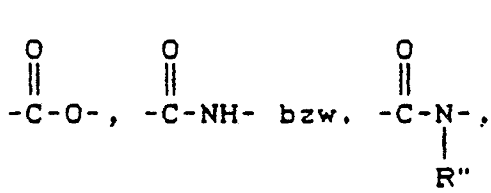

mit R″ = $C_1$-$C_4$-Alkyl, $C_5$-$C_6$-Cycloalkyl oder $C_6$-Aryl bzw. $C_7$-Aralkyl, oder für $-O-(CH_2)_q-O-$ mit q = 2 bis

10 (vorzugsweise 2 bis 4) stehen.

Keine phenolische Gruppe soll einen benachbarten Alkylsubstituenten am aromatischen Ring mit einem tertiären α-C-Atom haben.

Beispiele für die erfindungsgemäß einzusetzenden Mono-, Di- oder Polyphenole der Formeln (I) oder (II) sind:

Phenylphenole,
Hydroxybenzophenone,
N-(hydroxyphenyl)-Benzoesäureamid,
Hydroxybenzoesäuranilid,

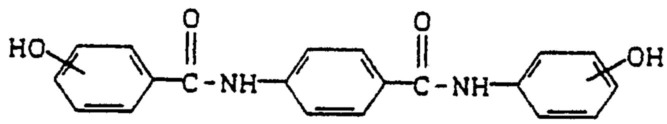

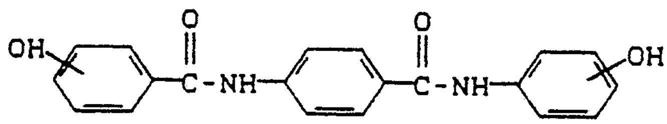

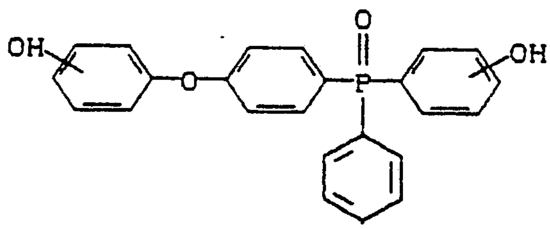

Resorcin,
Hydrochinon,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α-Bis-(hydroxyphenyl)-diisopropylbenzole.

Erfindungsgemäß einzusetzende Vertreter der genannten Gruppen von Bisphenolen sind:

4,4'-Dihydroxydiphenyl, gegebenenfalls im Gemisch mit
2,4'-Dihydroxydiphenyl,
4,4'-Dihydroxy-3,3',5,5'-tetramethyldiphenyl,
4,4'-Dihydroxy-3,3'-dimethyldiphenyl,
Bis-(4-hydroxyphenyl)-methan,
Bis-(4-hydroxy-3,5-dimethylphenyl)-methan,
Bis-(4-hydroxyphenyl)-ethan,
2,2-Bis-(4-hydroxyphenyl)-propan (Bisphenol A),
2,2-Bis-(4-hydroxy-3,5-dimethylphenyl)-propan,
2,2-Bis-(4-hydroxy-3,3'-dimethylphenyl)-propan,
1,1-Bis-(4-hydroxyphenyl)-cyclohexan,
1,1-Bis-(4-hydroxy-3,5-dimethylphenyl)-cyclohexan,
Bis-(4-hydroxyphenyl)-sulfon,
Bis-(4-hydroxy-3,3-dimethylphenyl)-sulfon,
Bis-(4-hydroxyphenyl)-sulfid,

Bis-(4-hydroxy-3,5-dimethylphenyl)-sulfid,
4,4-Dihydroxydiphenylether,
(4,4-Dihydroxy-2,2′,6,6′-tetrabrom)diphenylether,
Bis-(4-hydroxyphenyl)-keton,
Bis-(4-hydroxy-3,5-dimethylphenyl)-keton,
Bis-(4-hydroxy-3,3′-diethylphenyl)-propan,

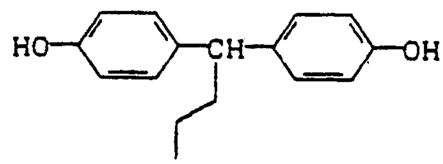
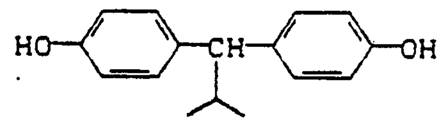

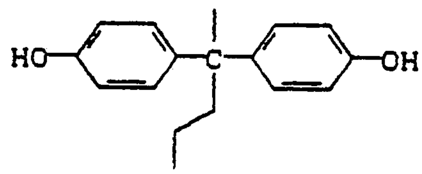
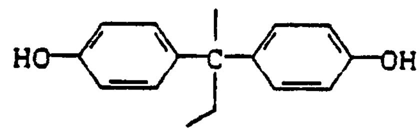

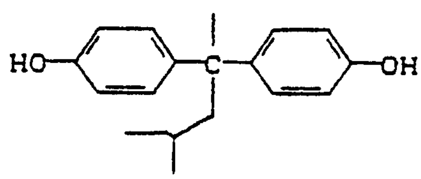
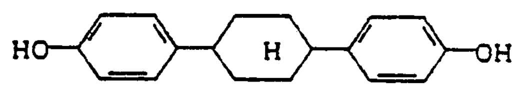

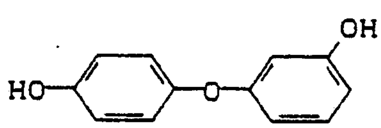
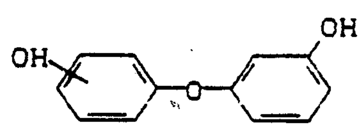

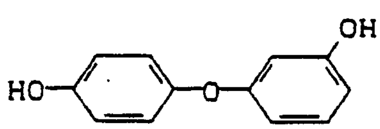
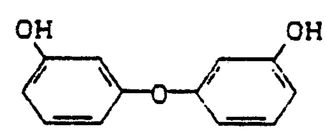

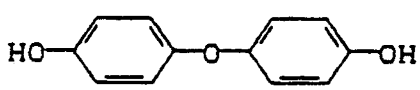
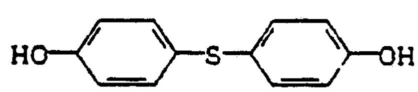

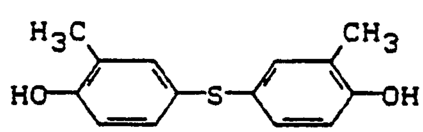

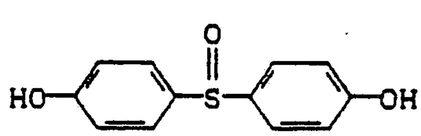
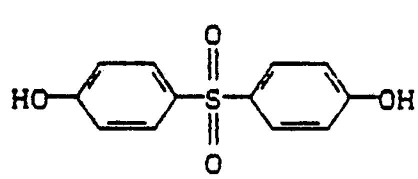

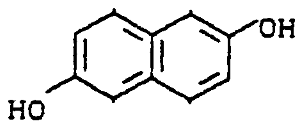

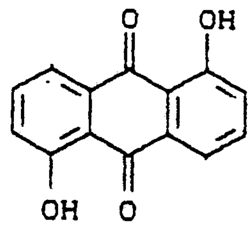

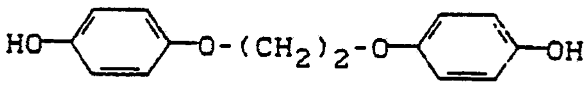

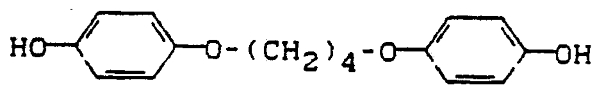

Besonders geeignete Bisphenole sind:
Bis-(4-hydroxyphenyl)-methan,
Bis-(4-hydroxy-3,5-dimethylphenyl)-methan,
2,2-Bis-(4-hydroxyphenyl)-propan,
2,2-Bis-(4-hydroxy-3,5-dimethylphenyl)-propan,
2,2-Bis-(4-hydroxy-3,3′-dimethylphenyl)-propan,
1,1-Bis-(4-hydroxyphenyl)-cyclohexan,
Bis-(4-hydroxyphenyl)-sulfon,
Bis-(4-hydroxy-3,5-dimethylphenyl)-sulfon,
Bis-(4-hydroxyphenyl)-sulfid,
4,4′-Dihydroxydiphenylether,
3,4′-Dihydroxydiphenylether,
3,3′-Dihydroxydiphenylether.

Die genannten Bisphenole können allein oder in Gemischen eingesetzt werden. Ganz besonders bevorzugt sind:
Bis-(4-hyroxyphenyl)-methan,
Bis-(4-hyroxyphenyl)-propan,
4,4′-Dihydroxydiphenylether,
3,4′-Dihydroxydiphenylether,
3,3′-Dihydroxydiphenylether,
sowie die Umsetzungsprodukte von Bisphenol A mit Epichlorhydrin, die z.B. als Phenoxy (®Union Carbide ) im Handel sind.

Oligomere und polymere Phenole sind dadurch gekennzeichnet, daß sie freie phenolische Hydroxygruppen in oder an der Oligomer- bzw. Polymerkette besitzen. Sie haben ein $M_n$ (Zahlenmittel-Molekulargewicht) < 40.000, bevorzugt von ca. 400 bis 30.000.

Beispiele für geeignete oligomere bzw. polymere Phenole sind die jedem Fachmann bekannten Polyvinylphenole und Phenol-Formaldehyd-Harze (Novolake und Resolharze).

Besonders bevorzugte Phenole sind die Di- bzw. Polyphenole der allgemeinen Formeln (1) (n = 2 oder 3) oder (II) (p = 1 oder 2), insbesondere die Diphenole der allgemeinen Formeln (I) und (II) sowie Novolake und Resolharze.

Die erfindungsgemäß einzusetzenden Polyimide sind allgemein bekannt und z.B. beschrieben in

1. Ullmann's Enzyklopädie der Technischen Chemie, 4. Auflage 1978, Verlag Chemie Weinheim, New York, Band 15, S. 435 - 440,

2. Encyclopedia of Polymer Science and Engineering, John Wiley, New York, 1988, second edition, Vol. 12, p. 364 - 383,

3. Polyimides, K. L. Mittal (editor), Plenum Press, New York and London 1984, volume 1.

Insbesondere genannt seien:
Polyimide,
Polyetherimide,
Polyesterimide,

Polyamidimide,
Polysulfonimide,
Polyketoimide.

Die vorliegende Erfindung bezieht sich auch auf Mischungen von Polyimiden mit zumindest einem zweiten Thermoplasten (nicht jedoch Polyamiden) und/oder Mischungen mit zumindest einem Elastomeren. Das Gewichtsverhältnis Polyimid zu zweitem Thermoplasten kann 99:1 bis 1:99, bevorzugt 99:1 bis 51:49, besonders bevorzugt 99:1 bis 70:30 betragen, während der Anteil der Elastomer-Komponente nicht größer als 50 Gew.-%, bevorzugt kleiner 35 Gew.-%, bezogen auf das Gesamtgewicht, sein sollte.

Geeignete Thermoplaste als Blendpartner sind Polycarbonate, Polyestercarbonate, Polyester, Polyesteramide, Polyarylate, Polyphenylenether, Polyalkylenether. Sie sind bekannt und weitgehend im Handel erhältlich.

Die Elastomeren sind Polymere, die eine Glasübergangstemperatur von unter 0 °C, vorzugsweise von unter -10 °C und insbesondere von -15 °C bis -140 °C besitzen.

Beispiele für solche Elastomere sind die verschiedensten Kautschuke, wie Ethylen-Propylen-Kautschuk, Polyisopren, Polychloropren, Polysiloxane, ataktisches Polypropylen, Dien-, Olefin- und Acrylatkautschuke sowie Naturkautschuke, Styrol-Butadien-Blockcopolymere, Ethylen-Copolymerisate mit Vinylacetat oder mit (Meth)-Acrylsäureestern, elastische Polyurethane, elastische Polycarbonat-Polyether- sowie Polyester-Polyether-Blockcopolymere.

Bevorzugt werden eingesetzt Copolymerisate - insbesondere Pfropfcopolymerisate (Pfropfkautschuke) - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth)Acrylsäureester mit 1 bis 18 C-Atomen in der Alkoholkomponente, also Polymerisate, wie sie z.B. in "Methoden der Organischen Chemie", Houben-Weyl, Band 14/1, Georg Thieme Verlag, Stuttgart 1961, Seiten 393 bis 406 und in C.B Bucknall, "Thoughened Plastics", Appl. Science Publishers, London, 1977 beschrieben sind. Die bevorzugten Polymerisate besitzen einen Gelgehalt von über 20, vorzugsweise über 40 Gew.-%.

Genannt werden z.B. Ethylen/Vinylacetat-Copolymerisate mit 15 bis 45 Gew.-% Vinylacetat-Einheiten und Schmelzindices von nicht fließfähig bis 1000, vorzugsweise von 0,1 bis 20, gemessen bei einer 190 °C und 2,16 kp Belastung nach DIN 53 735.

Weiterhin werden genannt die sogenannten EPM- bzw. EPDM-Kautschuke, in denen das Gewichtsverhältnis von Ethylen-zu Propylenresten im Bereich von 40:60 bis 90:10, vorzugsweise 40:60 bis 65:35, liegt.

Die Mooney-Viskositäten ($ML_{1+4}$/100 °C) der unvernetzten EPM- bzw. EPDM-Kautschuke liegen zwischen 25 bis 100, vorzugsweise zwischen 35 bis 90. Die Gelgehalte der unvernetzten EPM- bzw. EPDM-Kautschuke liegen unter 1 Gew.-%.

Diese Kautschuke besitzen vorzugsweise (seitenständige) nicht abreagierte funktionelle Gruppen wie Carbonsäure-oder Carbonsäureanhydrid-Gruppen, Estergruppen, Amingruppen, Epoxygruppen, Amidgruppen, die abgemischt über Bindungen oder physikalisch mit dem Polyimid in Wechselwirkung treten. Sie werden z.B. in der US 4 174 358, 4 479 927, 4 346 194, 4 251 644, 3 884 882, 4 547 740, 3 388 186 und 3 465 059 und in der DE-A 2 622 973 beschrieben.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt: konjugierte Diene, z.B. Isopren und Butadien, und nicht-konjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Metallyl-5-norbornen, 2-Isopropenyl-5-norbornen und Tricyclodiene, z.B 3-Methyltricyclo-(5,2,1,0,2,6)-3,8-decadien. Bevorzugt seien die nicht-konjugierten Diene Hexadien-1,5, Ethyliden-norbornen und Dicyclopentadien angeführt. Der Diengehalt im EPDM beträgt vorzugsweise 0,5 bis 10 Gew.-%.

Derartige EPM- bzw. EPDM-Kautschuke sind z.B. in der DE-OS 28 08 709 beschrieben. Sie enthalten z.B. aufgepfropfte Maleinsäureanhydridgruppierungen.

Darüber hinaus sind als Elastomere C) geeignet selektiv hydrierte Blockcopolymerisate eines vinylaromatischen Monomeren (X) und eines konjugierten Diens (Y) vom X-Y-Typ. Diese Blockcopolymerisate können nach bekannten Verfahren hergestellt werden.

Im allgemeinen kann für die Herstellung der geeigneten X-Y-Blockcopolymerisate aus z.B. Styrol, α-Methylstyrol und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508

ff' beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 30 00 282 beschrieben.

Ebenfalls geeignet sind mit Styrol und/oder Acrylnitril und/oder (Meth)-Acrylsäure und/oder -Alkylestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäure(estern), Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B in der DE-OS 23 48 377 (= US-PS 3 919 353) oder in DE-3 105 364 und DE-3 019 233 beschrieben sind.

Besonders bevorzugte Elastomere sind ABS-Polymerisate (sowohl Misch- als auch Pfropftypen), wie sie z.B. in der DE-OS 20 35 390 (= US-PS 3 644 574) oder in der DE-OS 22 48 242 (= GB-PS 1 409 275) beschrieben sind.

Daneben werden besonders bevorzugt Elastomere eingesetzt, die durch Pfropfreaktion von

I. 10 bis 40, vorzugsweis 10 bis 35, insbesondere 15 bis 25, Gew.-%, bezogen auf Pfropfprodukt, mindestens eines (Meth-)Acrylsäure(esters)und/oder eines Gemisches aus

10 bis 35, vorzugsweise 20 bis 35, Gew.-%, bezogen auf Gemisch, Acrylnitril und

65 bis 90, vorzugsweise 65 bis 80 Gew.-%, bezogen auf Gemisch, Styrol auf

II. 60 bis 90, vorzugsweise 65 bis 90, insbesondere 75 bis 85 Gew.-%, bezogen auf Pfropfprodukt eines Butadien-Polymerisats mit mindesetens 70 Gew.-%, bezogen auf II, Butadienresten als Pfropfgrundlage erhältlich sind, wobei vorzugsweise der Gelanteil der Pfropfgrundlage II ≧70 % (in Toluol gemessen), der Pfropfgrad G 0,15 bis 0,55 und der mittlere Teilchendurchmesser $d_{50}$ des Pfropfpolymerisats C) 0,2 bis 0,6, vorzugsweise 0,3 bis 0,5 µm betragen (vgl. z.B. DE 3 324 398 und EP 56 243).

Besonders bevorzugte Elastomere sind auch Pfropfpolymerisate aus

a) 25 bis 98 Gew.-%, bezogen auf Pfropfprodukt, Acrylatkautschuk mit einer Glasübergangstemperatur unter -20° C als Pfropfgrundlage und

b) 2 bis 75 Gew.-%, bezogen auf Pfropfprodukt, mindestens eines polymerisierbaren, ethylenisch ungesättigten Monomeren, dessen bzw. deren in Abwesenheit von (a) entstandenen Homo- bzw. Copolymerisate eine Glasübergangstemperatur über 25° C hätten, als Pfropfmonomere (vgl. z.B. EP 50 265).

Neben den zuvor genannten Elastomeren können z.B. auch elastische Polyurethane (z.B. Texin®), elastische Polyester-Polyether-Blockcopolymere (z.B. Hytrel®) sowie elastische Polycarbonat-Polyether-Blockcopolymere oder Polyetheramid-Copolymere nach US 3 660 356 eingesetzt werden. Diese Elastomeren sind bekannt und beispielsweise beschrieben in H.G. Elias, Makromoleküle, Hüthig u. Wepf Verlag Basel, 4. Auflage 1981, S. 787, und A. Noshay u. J.E. McGrath, Block Copolymers, Academic Press New York, 1977, S. 341.

Außerdem eignen sich als einzusetzende Elastomere Silikonpfropfkautschuke wie sie beispielsweise in DE 3 629 763 beschrieben sind.

Die erfindungsgemäßen Mischungen lassen sich zur Herstellung von Formkörpern in üblicher Weise verarbeiten.

Daneben können die erfindungsgemäßen Mischungen noch eine oder mehrere Füll- und/oder Verstärkungsstoffe mit verschiedener chemischer Zusammensetzung und verschiedenen Teilchenformen bzw. Teilchengeometrien (vgl. Übersicht in Kunststoffe, 73, 511 ff (1983)) enthalten.

Die Teilchengröße der Verstärkungsstoffe ist in weiten Bereichen variabel; die anorganischen Verstärkungsstoffe können nach üblichen Methoden nachbehandelt sein, z.B. um eine bessere Haftung zur Polyimidmatrix zu haben.

Die genannten Vertreter der anorganischen Verstärkungsstoffe können allein oder in Kombination von mehreren in den verstärkten Polyimiden enthalten sein.

Besonders bevorzugt werden Glasfasern, Glaskugeln (massive oder Hohlkugeln), Kreide, Kaolin, Talk und/oder Wollastonit verwendet.

Eine besonders stark verbesserte Fließfähigkeit und damit erleichterte Verarbeitung bei gleichzeitig deutlich verbesserter Reißfestikeit wird mit dem Bis-und/oder Polyphenol in Polyimiden, die faserförmige Verstärkungsstoffe enthalten, erzielt.

Schließlich können die erfindungsgemäßen Mischungen noch Pigmente, Flammschutzmittel, Antidripping-Mittel, Nukleirungsmittel, Gleit- und Entformungsmittel sowie Stabilisatoren in den üblichen Mengen enthalten.

Die Herstellung der Formmassen kann durch Vermischen der Komponenten in üblichen Mischaggregaten wie Walzen, Knetern, Ein- und Mehrwellenextrudern in beliebiger, sinnvoll angepaßter Reihenfolge

erfolgen. Die Mischungen können kontinuierlich oder diskontinuierlich hergestellt werden. Geschieht die Herstellung der Polyimide nach dem Zweistufenprozeß, so kann die Zugabe der erfindungsgemäßen Phenole auch auf der Stufe der oligomeren Polyamidsäuren erfolgen.

Zur Herstellung der erfindungsgemäßen Formmassen in Gegenwart von Verstärkungsstoffen können die Polyimidkomponente, die anorganische Verstärkungskomponente und die Phenolkomponente oberhalb des Schmelzpunktes des Polyimides in beliebiger Reihenfolge miteinander vermischt werden. Dies kann z.B. unmittelbar nach der Herstellung des Polyimids durch Zumischen des Phenol-Modifikators zu der als Strang abzuspinnenden Schmelze erfolgen, wobei die Compoundierung mit den versteifenden anorganischen Komponenten dann nachträglich erfolgt. Vorzugsweise werden die erfindungsgemäß modifizierten Polyimide jedoch durch Mischen aller Ausgangskoponenten, d.h. des Polyimids, der die Steifigkeit erhöhenden anorganischen Verstärkungsstoffe und der Phenolkomponente in üblichen Schneckenmaschinen in einem einzigen Arbeitsgang hergestellt.

Analog kann der zusätzlichen Einarbeitung von anderen Additiven, wie z.B. Farbstoffen oder Entformungsmitteln, verfahren werden.

Die Phenolkomponente kann dabei mit der Polyimidkomponente schon gemeinsam in den Einfüllstutzen des Extruders eindosiert oder aber zu einem späteren Zeitpunkt während der Extrusion den zu extrudierenden Massen zugesetzt werden.

Zur Compoundierung eignen sich übliche bekannte Apparaturen. Doppelschneckenextruder werden bevorzugt eingesetzt.

Die erfindungsgemäßen Polyimidformmassen zeichnen sich bei sonst im wesentlichen konstanten Eigenschaftsbild gegenüber vergleichbaren Formmassen, die keine phenolischen Modifikatoren der erfindungsgemäßen Struktur enthalten, durch verbesserte Verarbeitbarkeit (Fließfähigkeit) bei niedrigen Temperaturen sowie störungsfreie Oberflächen (weniger Fließnaht-Abbildungen bei großen Formteilen aus Werkzeugen mit mehreren Angüssen sowie eine verringerte Wasseraufnahme (und damit verbesserte Dimensionsstabilität) aus. In Einzelfällen ist zusätzlich sogar eine Verbesserung der Stabilität gegen den Einfluß von Feuchtigkeit und anorganischen Salzen, Hitze und UV-Licht ("Wetterstabilität") zu erzielen, obwohl die erfindungsgemäß einzusetzenden Phenole nicht sterisch gehindert sind.

Die neuen Polyimidformmassen eignen sich besonders zur Herstellung von Formkörpern nach dem Spritzgießverfahren insbesondere für großflächige, komplizierte und hochbeanspruchte Formteile, die sonst nur mit hohem technischen Aufwand bei der Verarbeitung mit Oberflächenstörungen oder oft gar nicht herstellbar sind. Der besondere Vorteil liegt in einer erhöhten Reißfestigkeit sowie Dimensionsstabilität der so gefertigten Formkörper.

Vorzugsweise eignen sich die Produkte für Anwendungen in den Bereichen der Elektro- und Elektronikindustrie, des Fahrzeugbaus, der Luft- und Raumfahrt, des Anlagen-und Apparatebaus, der kerntechnischen Anlagen sowie der Wehrtechnik mit hohen thermischen und mechanischen Anforderungen, d.h. für hochbeanspruchte Konstruktionselemente und Bauteile, von denen auch unter extremen Betriebsbedingungen (Einwirkung von Hitze und Wasser!) eine langdauernde, qualitativ ständig gleichmäßige Nutzung verlangt wird. Beispiele sind Isolierteile und Abstandshalter in Elektronenbestrahlungseinrichtungen, Abstandsringe und Isolierscheiben in Bildröhren, Konstruktionselemente in Schrittschaltmotoren, Gleitlager, Führungsrollen und Federn in Kopiermaschinen, bewegte Isolierteile in Plottern, Anschlagplatten in Banddruckern, Lager in Datenspeichergeräten, Buchsen und Gleitstücke in Zündverteilern für Kraftfahrzeuge, Druckscheiben, Lagerschalen, Gleit- und Dichtringe in Getrieben, Lagerelemente für Strahltriebwerke, Gleitlager und Halterungen für Satellitenantennen, Ventilsitze, Ventilplatten und Kolbenringen in hydraulischen Anlagen, Dichtungen und Dichtringe in Erdgas-Kugelhähnen, Dichtungen in hydraulischen Systemen von Vakuumpumpen, Halterungen für Probekörper in einem Kernreaktor sowie Hochspannungsisolierungen in einem Protonenbeschleuniger.

Beispiele

Eingesetzt für die folgenden Versuche wurde das Polyetherimid Ultem® 1000 der Fa. General Electric.

Herstellung und Prüfung der Formmassen:

Die Verarbeitung von Ultem® mit 3,4′-Dihydroxydiphenylether (zudosiert als Pulver) erfolgte auf einem kontinuierlich arbeitenden Doppelwellenextruder ZSK 32 der Fa..Werner und Pfleiderer. Die Einstelltemperaturen wurden so gewählt, daß die angegebenen Massetemperaturen eingehalten wurden.

Zusammensetzung:

Beispiel 1:

95 Gew.-% Ultem® 1000
5 Gew.-% 3,4′-Dihydroxydiphenylether

Beispiel 2:

90 Gew.-% Ultem® 1000
10 Gew.-% 3,4′-Dihydroxydiphenylether

| Typ, Zusammensetzung | Einstelltemp. °C | Massetemp. °C | Drehzahl U/min | Arbeitsaufnahme (Nm) |
|---|---|---|---|---|
| Beispiel 1 | 280 | 315 | 80 | 85 - 90 |
| Beispiel 2 | 280 | 305 | 80 | 30 - 35 |
| Durchsatz: 8 kg/h | | | | |

Von den Formmassen nach Beispielen 1 und 2 wurden auf einer üblichen Spritzgußmaschine (Arburg 170) 80 x 10 x 4 mm Prüfstäbe hergestellt. Geprüft wurden der Biege-E-Modul (nach DIN 53 457) sowie die Kerbschlagzähigkeit nach Izod (nach ISO 180) bei Raumtemperatur.

| Typ, Zusammensetzung | Einstelltemp. °C | Formtemp. °C | Spritzdruck bar |
|---|---|---|---|
| Beispiel 1 | 280 | 80 | 50 |
| Beispiel 2 | 280 | 80 | 50 |
| Vergleich | | | |
| Ultem® 1000 | 380 | 90 | 70 |

| Vergleich | | | |
|---|---|---|---|
| Eigenschaft | Ultem® 1000 | Beispiel 1 | Beispiel 2 |
| Biege-E-Modul [$N/mm^2$] | 3337 | 3844 | 3854 |
| Izod-Kerbschlag $a_k$ [$KJ/m^2$] bei 23 °C | 5,0 | 4,5 | 4,5 |

Die Wasseraufnahme der Formmassen wurde durch Lagerung von 3 Prüfstäben in Wasser von 40 °C gravimetrisch bestimmt.

| $H_2O$-Aufnahme in Gew.-% | | | |
|---|---|---|---|
| Tage bei 40° C im Wasser | Vergleich Ultem® 1000 | Ultem® 1000 + 5 Gew.-% 3,4′-D. | Ultem® 1000 + 10 Gew.-% 3,4′-D. |
| 1 Tag | 0,42 % | 0,39 % | 0,36 % |
| 6 Tage | 0,90 % | 0,68 % | 0,67 % |
| 14 Tage | 1,18 % | 0,97 % | 0,94 % |

## Ansprüche

1. Thermoplastisch verarbeitbare Polyimid-Formmassen bzw. Formmassen von Polyimid-Mischungen, dadurch gekennzeichnet, daß sie 0,1 bis 40 Gew.-%, vorzugsweise 1 bis 20 Gew.-%, bezogen auf die Polyimid-oder Polyimidgemisch-Menge, an oligomeren oder polymeren Phenolen und/oder Mono-, Di- oder Polyphenole der Formeln (I) oder (II) enthalten,

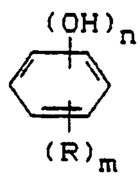

(I)

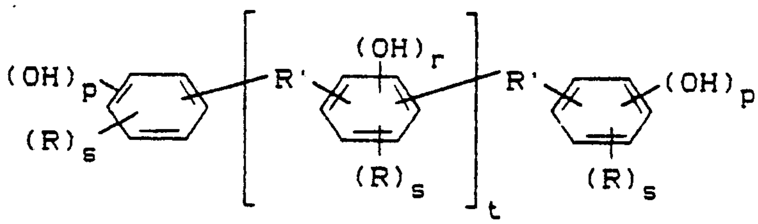

(II)

wobei
n für 1, 2 oder 3 steht,
m bedeutet 3, 4 oder 5 mit (m + n) = 6,
p steht für 1 oder 2,
r bedeutet 0, 1 oder 2,
s steht für 0, 1, 2, 3 oder 4,
t bedeutet 0, 1, 2, 3 oder 4,
und jedes R unabhängig Wasserstoff, Halogen, bevorzugt Fluor, Chlor, Brom, $C_1$-$C_{12}$-Alkyl, $C_1$-$C_4$-Alkoxy, $C_6$-$C_{18}$-Aryl oder $C_7$-$C_{20}$-Aralkyl bedeutet und wobei in Formel (II) zwei benachbarte Phenylkerne auch über Reste (R) verbrückt werden können, d.h. kann auch stehen für
-O-, -S-, $-\underset{\underset{O}{\|}}{C}-$,
$(CH_2)_n$, (N′ = 1 bis 5), =CH-, -CH=CH-,
und jedes R′ unabhängig für eine chemische Bindung, einen $C_1$-$C_7$-Alkylen- oder $C_5$-$C_6$-Cycloalkylenrest, für

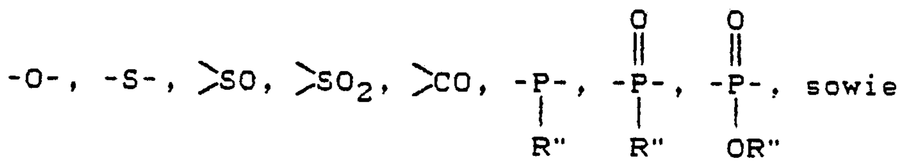

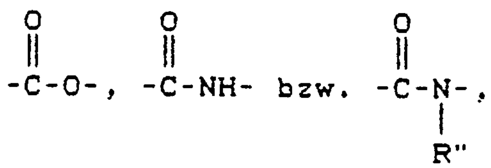

mit R" = $C_1$-$C_4$-Alkyl, $C_5$-$C_6$-Cycloalkyl oder $C_6$-Aryl bzw. $C_7$-Aralkyl, oder für $-O-(CH_2)_q-O-$ mit q = 2 bis 10 steht, wobei jedoch keine phenolische Gruppe einen benachbarten Alkylsubstituenten am aromatischen Ring mit einem tertiären α-C-Atom haben darf.

2. Polyimid-Formmassen nach Anspruch 1, dadurch gekennzeichnet, daß sie 1 bis 20 Gew.-% an Di- und/oder Polyphenolen und/oder Novolaken oder Diolharzen enthalten.

3. Verfahren zur Herstellung von Polyimid-Formkörpern durch thermische Verformung, dadurch gekennzeichnet, daß man Polyimidformmassen nach Anspruch 1 oder 2 bei Schmelztemperaturen unter 320 °C verarbeitet.